Europäisches Patentamt

European Patent Office

Office européen des brevets

(19)

(11) **EP 1 486 954 A1**

(12) **EUROPEAN PATENT APPLICATION**

| | |
|---|---|
| (43) Date of publication:<br>**15.12.2004 Bulletin 2004/51** | (51) Int Cl.[7]: **G11B 7/00** |

(21) Application number: **03013018.1**

(22) Date of filing: **10.06.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **DEUTSCHE THOMSON-BRANDT GMBH**<br>**78048 Villingen-Schwenningen (DE)** | (72) Inventor: **The designation of the inventor has not yet been filed**<br><br>(74) Representative: **Thies, Stephan**<br>**Deutsche Thomson-Brandt GmbH,**<br>**European Patent Operations,**<br>**Karl-Wiechert-Allee 74**<br>**30625 Hannover (DE)** |

(54) **Method for land pre-pit recovery**

(57)    The present invention relates to a method for recovering land pre-pits from a signal obtained from an optical recording medium. According to the invention, the method comprises the steps of:

- generating a corrected wobble signal for rejecting wobble beats,

- providing a phase locked loop for the wobble signal for the accurate measurement of the phase of the land pre-pits, and

- providing a low-noise phase detector for the phase locked loop.

Fig. 1

**Description**

The present invention relates to a method and a device for recovering land pre-pits, and to an apparatus for reading from and/or writing to optical recording media using such method or device.

According to the specification of DVD-RW (Standard ECMA-338 - 80 mm (1,46 Gbytes per side) and 120 mm (4,70 Gbytes per side) DVD Re-recordable Disk (DVD-RW)), the push-pull signal includes a land pre-pit (LPP) signal and a wobble signal. The LPP signal consists of a sequence of peaks. The wobble signal is a sinusoidal signal. The peaks of the LPP signal are quite narrow in comparison with the period of the wobble, and are superimposed on the wobble. Only one peak can occur for each wobble period and its phase relative to the wobble is 270° with a tolerance of 10°. Most of the wobble periods do not have a peak. Only some of them, minimum one and maximum three over 16, can have a peak. This rule is defined by the specific data coding of LPP data. In every pair of Sync frames (16 wobble periods), there is a set of three bits, which determine the presence of peaks according to on/off modulation. The set is either at the beginning of the first frame or at the beginning of the second one. The first bit of the set is a frame Sync bit, so it is always 1. The second bit is a sector Sync bit, so it is always 1 in the first pair of Sync frames of the sector (26 frames). The third bit is a data bit. Only in the first pair of Sync frames the third bit is not a data bit, but is related to the location of the set, namely 1 for the first frame, 0 for the second one.

For writing to the disk a DVD recorder has to be locked to the wobble signal and to decode the LPP data. Unfortunately, several interfering disturbances degrade the quality of the push-pull signal:

1.) Tracking error signal: This signal is located in the lower part of the frequency spectrum. Therefore, it does not disturb the wobble signal, which has higher frequency.
However, it interferes with the LPP signal, specifically the sector Sync word, which has a very low frequency.

2.) Residual HF signal: When the focus of a light beam used for reading does not perfectly cross the tracks, the four output currents of a photodetector used for detecting the light reflected from the disk are not perfectly balanced. When a push-pull signal is produced, a part of the HF signal passes. This HF signal does not disturb the wobble signal, which has lower frequency, but it disturbs the LPP signal.

3.) Disk speed variations: The eccentricity, the servo control loop and the constant angular velocity (CAV) mode change the disk speed. Therefore, the wobble signal is not a pure sinus, but it is frequency modulated according to the disk speed with a corresponding spreading of the bandwidth.

4.) Adjacent track interference: The wobble signal of adjacent tracks overlaps with the wobble signal of the current track, generating an amplitude modulation of the wobble signal and violating the abovementioned phase relationship. Therefore, the physical tolerance of 10° is dramatically increased.

Therefore, it is an object of the invention to provide a method for recovering land pre-pits from a signal obtained from an optical recording medium, which overcomes the above problems.

According to the invention, a method for recovering land pre-pits from a signal obtained from an optical recording medium comprises the steps of:

-    generating a cleaned wobble signal for rejecting wobble beats,
-    providing a phase locked loop for the wobble signal for the accurate measurement of the phase of the land pre-pits, and
-    providing a low-noise phase detector for the phase locked loop.

For a better understanding of the invention, an exemplary embodiment is specified in the following description with reference to the figures. It is understood that the invention is not limited to this exemplary embodiment and that specified features can also expediently be combined and/or modified without departing from the scope of the present invention. In the figures:

Fig. 1    shows a block diagram of a demodulator according to the invention;

Fig. 2    schematically shows the influence of wobble beat; and

Fig. 3    shows a block diagram of an LPP demodulator and decoder.

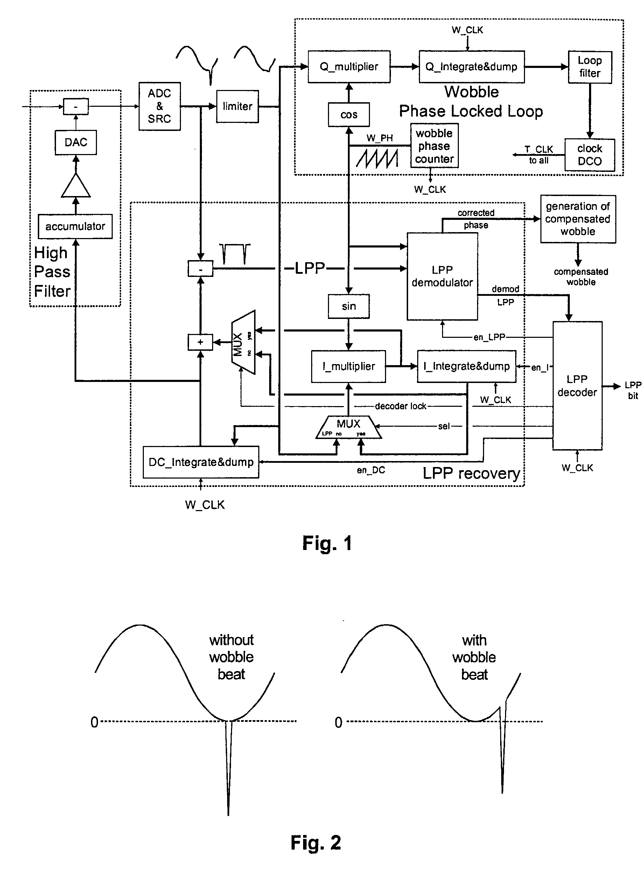

In Fig. 1 the block diagram of a demodulator according to the invention is shown. In order to retrieve the amplitude of the peaks, the demodulator searches for the time at which the peaks are located. The phase and the frequency of the peaks are not stable due to disk speed variations. The spectrum of the peaks has several components at the distance of $F_w/16$, where $F_w$ is the wobble frequency, and all of them are affected by disk speed variations. A phase locked loop (PLL) which tries to lock directly to the peaks, might erroneously lock to a spurious frequency component. Therefore, a first step for the synchronization of the demodulator is to lock to the wobble as a pure tone.

A digital controlled oscillator (DCO) of the PLL generates a clock T_CLK, which is a clock synchronous with the disk speed. A wobble phase counter, using T_CLK, generates a wobble phase signal, which is a saw tooth signal locked to the wobble. A sample rate converter (SRC) synchronizes the data rate of the signal to the disk speed. All the blocks use T_CLK, running synchronously with the disk speed.

The phase detector of the wobble PLL is a correlator, which includes a cos generator, a multiplier and an integrate&dump. The integrate&dump integrates the signal over a wobble period and dumps at the end of the period using a W_CLK pulse generated by the wobble phase counter, as a terminal count. The last value of the integration, before the dump, is held in a register, which is updated every wobble period.

A similar correlator is used also for the in-phase path, in order to measure the amplitude of the wobble, which is needed for the extraction of the LPP signal.

Then an LPP demodulator, using the abovementioned wobble phase, applies a proper filter and an LPP decoder extracts the LPP data.

However, with the wobble beat another problem arises. Due to the interference from adjacent tracks, the PLL, which locks to the wobble, has a small phase error. In fact the interference with adjacent tracks adds another sinusoidal waveform to the wobble, which has an uncorrelated phase and a lower amplitude. The resulting waveform still has the same frequency, but its phase is modified. Therefore, the wobble PLL is able to perfectly retrieve the frequency, but its phase, the saw tooth at the output of the PLL, needs to be corrected to get the exact timing of the current track. This corrected timing is also needed for another reason. The recorder's write clock should be synchronized to the effective wobble of the current track. A compensated wobble is generated using the corrected phase for the synchronization of the recorder.

The compensation of the wobble is implemented using the LPP peaks. This is possible for the following reasons:

- peaks of adjacent tracks cannot overlap with the peaks of the current track, because of the -RW LPP coding rule, which shifts the LPP set of 3 bits relative to the adjacent frame, when LPP peaks of the current track would be close to the LPP peaks of adjacent tracks,

- variations of the phase offset are much slower than the variations of the wobble phase. Therefore, the abovementioned problem for the direct retrieval of the phase of the peaks does not exist for the lock of the phase offset.

Then, for the recovery of the amplitude of the peaks and for the phase compensation, the LPP signal is precisely retrieved.

Due to the tracking error signal the level of the push pull signal is not fixed, but it varies from one wobble period to the other. In order to detect the amplitude of the LPP peaks, the signal is clamped, so that the wobble remains in the positive range and the peak in the negative range.

As illustrated in Fig. 1, before the decoder locks to the LPP signal for synchronizing its wobble and frame counters, both multiplexers select the first input (no). For the demodulation of the LPP peaks, the clamped signal is generated by subtracting a value, which is fixed during the wobble period and which is estimated as the sum of the DC level of the signal plus the amplitude of the wobble. This solution works in the case of perfect synchronization of the LPP signal with the wobble signal. Due to the wobble beat, however, the peak is not exactly at the top of the wobble. Therefore, the amplitude of the peak, which is important for the demodulation, is decreased in an unpredictable way, as illustrated in Fig. 2. This problem does not limit the lock-in process of the decoder that much, but it influences the data demodulation.

Therefore, a more sophisticated and expensive solution is needed after the lock-in. The pure LPP signal is calculated by subtracting the DC level and the reconstructed version of the wobble signal, including the wobble beat.

The DC level is calculated by integrating the signal over one wobble period. Since an LPP peak would disturb this calculation, the prediction of a previous wobble period without LPP peak is used. A proper enable signal, marked as en_DC in Fig. 1, is used to disable the register of the integrate&dump when peaks are expected. Of course, this implies that the timing of the LPP is known in advance. Therefore, this precise extraction is adopted only after the lock of the decoder, when the wobble periods with LPP peaks are known. Before the decoder lock, the limiter in Fig. 1 attenuates the negative effects of the LPP peaks. The DC level, calculated in this way, includes the effect of the tracking error signal. Consequently it varies a little bit from period to period.

The wobble signal is reconstructed by generating a local sinusoidal waveform locked to the wobble. This is done using a sin generator. This generator receives a suitable timing from the wobble PLL. Its output is multiplied by an appropriate amplitude value. This value is estimated in the previous wobble period by correlating the received wobble with the sinusoidal signal of the sin generator. Preferably, due to the silicon cost of multipliers and sin generators, a single sin generator and a single multiplier are used for both functions, i.e. the correlation of the incoming wobble and the generation of the local wobble. This is feasible because the reconstructed wobble is calculated only in the wobble periods where the peaks are expected, while the correlator is not used for amplitude calculation in these wobble periods. In fact, the peaks would disturb the amplitude measurement. A prediction of the amplitude is used instead. When the I_integrate&dump of the correlator employed for the amplitude measurement is not used, its register is disabled by means of an en_I signal and it feeds the last amplitude value.

The signal sel in Fig. 1 determines the wobble periods when LPP peaks are expected. Counting the wobble periods in a couple of frames (16 wobble periods), the wobble periods, when the peaks are expected, are no. 1, 3, 9, 11 if the decoder is locked. Only for the first couple of frames in the sector, these values are different, no. 1, 2, 3, 9, 10. Therefore, apart from the first couple of frames, the prediction of amplitude values concerns the previous wobble period, considering the last measurement of the correlator. This prediction is a good estimation because the wobble amplitude does not change very rapidly and the beat of adjacent track is also very slow. In the case of the first couple of frames in the sector, the prediction is less precise because it concerns also the second or the third previous wobble periods. However, it is only used for LPP data synchronization and not for data decoding. Therefore, there are no important consequences as the LPP data synchronization relies mainly on the consistency of the peak location. Small amplitude errors are tolerated.

The same prediction is valid for the DC level calculation. In fact, the integrator would even more in this case measure false values when peaks are present. Therefore, after the decoder lock, a similar prediction is used. Before the decoder lock is reached, the LPP peaks, disturbing DC and amplitude measurements, are partly discarded in the limiter.

The rejection of the tracking error signal, which is in the lower part of the frequency spectrum, is divided into two stages. The first stage is implemented by means of a simple feedback before an analog to digital converter (ADC). The cutoff frequency is regulated by means of an attenuator, which searches the proper trade-off between low-frequency rejection and the attenuation of the first component of the LPP signal at the frequency $F_w/16$. The main goal of this filter is the proper adjustment of the signal within the dynamic range of the ADC. The full rejection of the tracking error signal is not necessary at this stage because the integrate&dump of I and Q paths are able to discard it anyhow.

In the second stage, for the proper extraction of the LPP signal, the residual tracking error signal is rejected by subtracting the predicted value of the residual DC value measured in the DC_integrate&dump.

The demodulation of the LPP signal necessitates the detection of the peaks, specifically their amplitude and their phase with respect to the retrieved wobble.

The main problem which affects the demodulation of the LPP signal is the residual HF signal. Consequently, simple methods based on the measurement of the maximum value of the peak and its phase location, which might be sufficient for unrecorded disks in the DVD-R format, have serious limitations when applied to disks in the DVD-RW format. Therefore, a more robust demodulation scheme is needed.

Similar to the wobble demodulation, also for the demodulation of the LPP signal correlation methods are preferred, which are less affected by noise. Of course, a matched filter is the best correlator for the demodulation of the amplitude.

Assuming that white noise disturbs the LPP signal, the LPP filter impulse response preferably replicates the shape of the peaks, which have approximately a triangular form. However, the spectrum of the residual HF signal is not flat and cannot be considered as white noise. Therefore, a whitening filter is added in front of the filter matched to the LPP peaks. Considering that in this case the whitening filter is a low-pass filter, it is realised by enlarging the impulse response of the filter. If a triangular impulse response filter is used, it is sufficient to enlarge the triangle of its impulse response to get a simple approximation of the whitening filter.

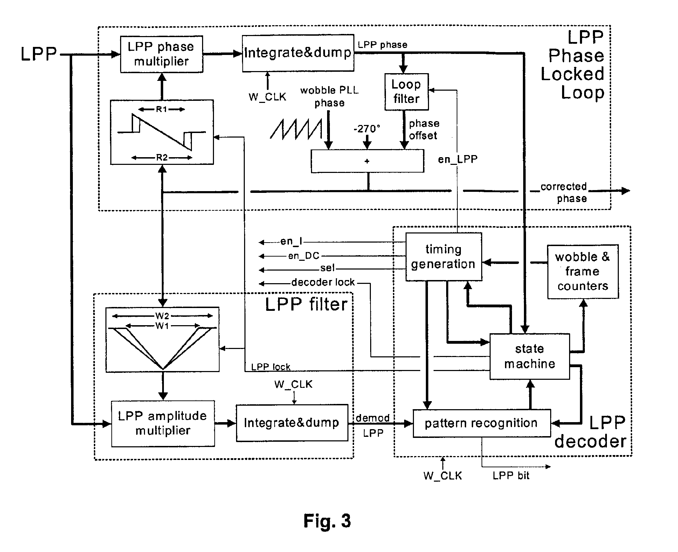

In case the corrected phase synchronized with the LPP signal is available, the correlator of the amplitude demodulator is preferably implemented by means of a multiplier, a function generator synchronized with the corrected phase and an integrate&dump, as depicted in the bottom of Fig. 3. The width W1 of the generated pulse advantageously matches the input peaks of the LPP signal. Moreover, W1 is increased to include the effect of the whitening filter.

If the decoder is locked but the phase error due to wobble beat has not yet been corrected (no LPP lock), a larger width W2 is selected for the LPP filter in the function generator of the correlator.

For the phase detection it is important to use a low-noise method. The correlator depicted in the top of Fig. 3 allows to implement such a low-noise method. In fact, because the result is not based on a unique sample, but on several samples of the input signal, the integration rejects some noise.

The local waveform of the phase correlator is a symmetric ramp with a clipped range R. The output of the correlator is proportional to:

- the phase difference between the local generated ramp and the peak at the input,
- the energy of the peak.

The slope of the ramp defines the gain of the phase detector. Its range R defines the phase region where the phase detector produces useful results. Outside this range the result of the detector is forced to zero, because the peaks are expected only within a limited phase shift with respect to the locked wobble. A further extension of the range would only generate noise at the output of the detector. Therefore, if the peaks are narrow, the range is preferably limited to the maximum phase shift. If the peaks are larger, the range is preferably increased to cover the whole peak, so that the integration is calculated over all the sampled values of the peak. Other factors, as the jitter of the wobble PLL, are advantageously taken into account by a further increase of the range.

The range R of the phase correlator is the sum of all the above factors: R=2S+P+E, where S is the maximum absolute deviation of the phase shift, P is the width of the peak and E is the error due to other factors as jitter. If a value of R much higher than P is used, the noise at the output of the phase detector increases, because a higher number of noisy samples, which do not contain a useful signal of the peak, are passed to the integrator.

For a compensation of the phase error due to wobble beat, instead of the direct measurement of the phase error using the abovementioned phase detector, a PLL using the same detector with a smaller range R reduces the noise of the corrected phase. The measured phase, at the output of the phase detector, is low-pass filtered for obtaining the phase offset. The phase offset is then used as a phase correction to be added to the phase generated by the first PLL.

Considering that the LPP peaks are not repeated every wobble period, and that the frame Sync bit is repeated every couple of frames, the loop of the LPP PLL is enabled only once for every couple of frames, when the Sync bit is detected by the LPP decoder. For this reason the LPP decoder preferably sends a suitable enable signal en_LPP to the PLL loop filter, specifying the timing of the Sync bit, which may be in the first frame or in the second frame.

Therefore, the phase detector measures the phase difference between the LPP phase and the corrected LPP phase, computed at the output of the loop. When the PLL is locked, this phase difference is very small and the corrected phase is available at the output of the PLL, so the ramp is centred at the phase of the LPP and the detector operate with a minimum range R. Before the PLL lock, the peaks are searched in a wider range, i.e. a larger value of R is employed, because a phase shift is expected:

$$R2=2S+P+E.$$

When the LPP PLL is locked, the range is preferably reduced to obtain a higher noise rejection, i.e. to reject samples which do not belong to the peak. In this case a smaller value of R is employed:

$$R1=P+E.$$

Considering the low bandwidth of the LPP PLL, it is assumed that the contribution E of the jitter is limited to the jitter of the wobble PLL and the jitter of LPP PLL is neglected.

A similar adaptive method is used for the amplitude correlator. After the lock-in process the width of the local waveform W is narrowed because there is a low phase error. On the other hand, during the lock-in process, a larger waveform is provided for catching the peak. Otherwise, due to the preliminary phase error which shifts the local waveform out of the LPP peak, the LPP amplitude is dramatically attenuated, with the risk of an unsuccessful lock-in process.

Another advantage of the PLL in comparison with the direct measurement of the LPP phase concerns the sensitivity of the phase detector to the amplitude of the peaks. The direct measurement of the phase using the phase detector is affected by amplitude variations. In contrast, the solution by means of the PLL better tolerates amplitude variations, which might influence the lock-in time of the PLL. Their influence on the residual error is low.

**Claims**

1. Method for recovering land pre-pits from a signal obtained from an optical recording medium comprising the steps of:

   - generating a corrected wobble signal for rejecting wobble beats,
   - providing a phase locked loop for the wobble signal for the accurate measurement of the phase of the land pre-pits, and
   - providing a low-noise phase detector for the phase locked loop.

2. Device for recovering land pre-pits from a signal obtained from an optical recording medium comprising

   - a wobble corrector for generating a corrected wobble signal for rejecting wobble beats,
   - a phase locked loop for the wobble signal for the accurate measurement of the phase of the land pre-pits, and
   - a low-noise phase detector for the phase locked loop.

3. Apparatus for reading from and/or writing to recording media, **characterized in that** it uses a method according to claim 1 or comprises a device according to claim 3 for recovering land pre-pits from a signal obtained from an optical recording medium comprising.

**Fig. 1**

**Fig. 2**

**Fig. 3**

European Patent
Office

**EUROPEAN SEARCH REPORT**

Application Number

EP 03 01 3018

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 229 546 A (SAMSUNG ELECTRONICS CO LTD) 7 August 2002 (2002-08-07) * the whole document * | 1-3 | G11B7/00 |
| A | EP 0 945 866 A (PIONEER ELECTRONIC CORP) 29 September 1999 (1999-09-29) * the whole document * | 1-3 | |
| A | US 2001/028613 A1 (ANDO HIDEO ET AL) 11 October 2001 (2001-10-11) * the whole document * | 1-3 | |
| A | EP 0 996 118 A (PIONEER CORP) 26 April 2000 (2000-04-26) * the whole document * | 1-3 | |
| A | EP 0 751 506 A (PIONEER ELECTRONIC CORP) 2 January 1997 (1997-01-02) * the whole document * | 1-3 | |
| A | US 2002/105882 A1 (KIYOSE MASASHI) 8 August 2002 (2002-08-08) * the whole document * | 1-3 | TECHNICAL FIELDS SEARCHED (Int.Cl.7) G11B H03L |
| A | US 2002/021636 A1 (MORIWAKI ISAMU) 21 February 2002 (2002-02-21) * the whole document * | 1-3 | |

The present search report has been drawn up for all claims

| Place of search | Date of completion of the search | Examiner |
|---|---|---|
| MUNICH | 24 November 2003 | Kyranos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 486 954 A1

**ANNEX TO THE EUROPEAN SEARCH REPORT
ON EUROPEAN PATENT APPLICATION NO.**                 EP 03 01 3018

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2003

| Patent document cited in search report | | Publication date | Patent family member(s) | | Publication date |
|---|---|---|---|---|---|
| EP 1229546 | A | 07-08-2002 | KR | 2002065286 A | 13-08-2002 |
| | | | CN | 1368724 A | 11-09-2002 |
| | | | EP | 1229546 A1 | 07-08-2002 |
| | | | JP | 2002237035 A | 23-08-2002 |
| | | | US | 2002105869 A1 | 08-08-2002 |
| EP 0945866 | A | 29-09-1999 | JP | 11283248 A | 15-10-1999 |
| | | | EP | 0945866 A2 | 29-09-1999 |
| | | | US | 6272089 B1 | 07-08-2001 |
| US 2001028613 | A1 | 11-10-2001 | JP | 2001297445 A | 26-10-2001 |
| EP 0996118 | A | 26-04-2000 | JP | 2000132868 A | 12-05-2000 |
| | | | CN | 1252595 A | 10-05-2000 |
| | | | EP | 0996118 A2 | 26-04-2000 |
| | | | US | 2003053406 A1 | 20-03-2003 |
| | | | US | 6181672 B1 | 30-01-2001 |
| | | | US | 2001002899 A1 | 07-06-2001 |
| EP 0751506 | A | 02-01-1997 | JP | 9017029 A | 17-01-1997 |
| | | | DE | 69615291 D1 | 25-10-2001 |
| | | | DE | 69615291 T2 | 25-07-2002 |
| | | | EP | 1120782 A2 | 01-08-2001 |
| | | | EP | 1118981 A2 | 25-07-2001 |
| | | | EP | 1118982 A2 | 25-07-2001 |
| | | | EP | 1118983 A2 | 25-07-2001 |
| | | | EP | 0751506 A2 | 02-01-1997 |
| | | | US | 6181657 B1 | 30-01-2001 |
| | | | US | 2001000697 A1 | 03-05-2001 |
| | | | US | 2001000696 A1 | 03-05-2001 |
| | | | US | 2001000454 A1 | 26-04-2001 |
| | | | US | 2001000890 A1 | 10-05-2001 |
| US 2002105882 | A1 | 08-08-2002 | JP | 2002230915 A | 16-08-2002 |
| US 2002021636 | A1 | 21-02-2002 | JP | 2001176069 A | 29-06-2001 |

For more details about this annex : see Official Journal of the European Patent Office, No. 12/82

9